# EUROPEAN PATENT APPLICATION

(11) **EP 2 778 549 A2**
(43) Date of publication of application: **17.09.2014**
(21) Application number: 14386005.4
(22) Date of filing: 12.03.2014
(51) Int. Cl.: F24F 3/16

(54) **Absorption and air purification device mounted in lighting fixture**

(30) Priority: 12.03.2013 GR 20130100144
(71) Applicant: Katselis, Ioannis, 12135 Peristeri Attikis (GR)
(72) Inventor: Katselis, Ioannis, 12135 Peristeri Attikis (GR)

(57) **Abstract**

The absorption and air purification device adapted in lighting fixtures , is designed to collect and purify the air that is infected by smoking of, cigarettes, cigars, pipes, etc.It is an absorption and air purification system, using the space that has a lampshade inside, placed by unscrewing the lamp, and in its position by screwing the device, figure 1. The adapter support (3) has the same shape and size as this one of a screwed lamp, while we use the terminals of the metal base to power the device with electricity, as in the case of a lamp. We replace the light which was provided by the lamp been removed, by using a led tape around the device (6).

## Description

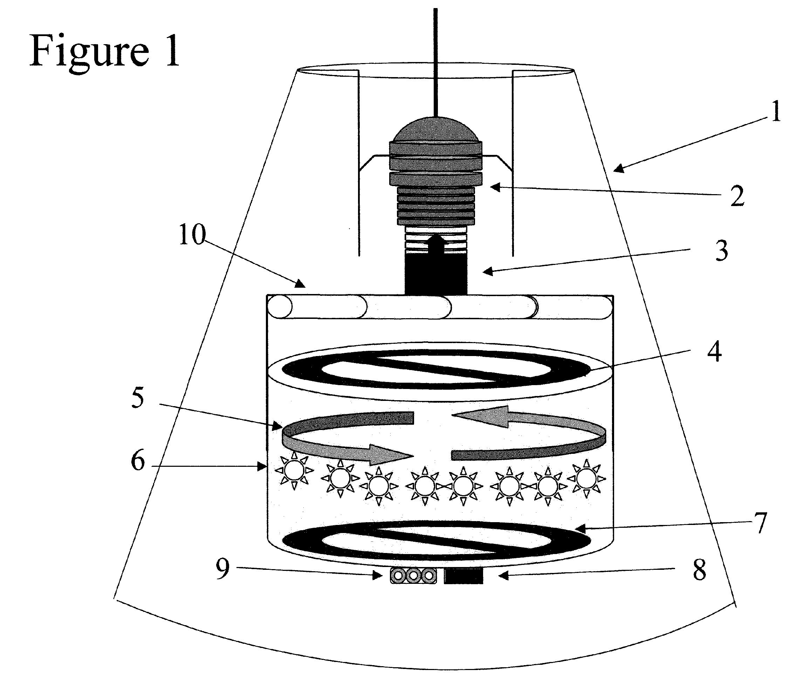

The absorption and air purification device, adapted in lighting fixtures , is designed to collect and purify the air that is infected by smokers of cigarettes, cigars, pipes, etc. It is an absorption and air purification system, using the space that has the lampshade inside, placed by unscrewing the lamp, and in its position we screw the device, figure 1. The adapter support (3) has the same shape and size as this one of a screwed lamp , while using the terminals of the metal base to power the device with electricity as in the case of a lamp. We replace the light which was provided by the lamp that has been removed from the fixture, by using a led tape around the device (6). The device has as an alternative energy source, batteries (10), that give power to the device automatically in case of a power outage, providing a 3 hours autonomy. When the electricity power is restored, the power goes to the main source, while batteries are loading in the same time.

This device has at the bottom a silk fabric filter (7) which is removed for washing and replaced again. Above it and inside the device there is a turboprop motor that is sucking the air, forcing it to pass, at first from the filter (7) where it is retained part of the harmful substances and then it is carried forward to the carbon filter (4) where is realized the final cleaning . A timer switch informs you when filters needs change, through a light display (9). The handling of the device can be done though a switch (8) been on the device or though a remote control.

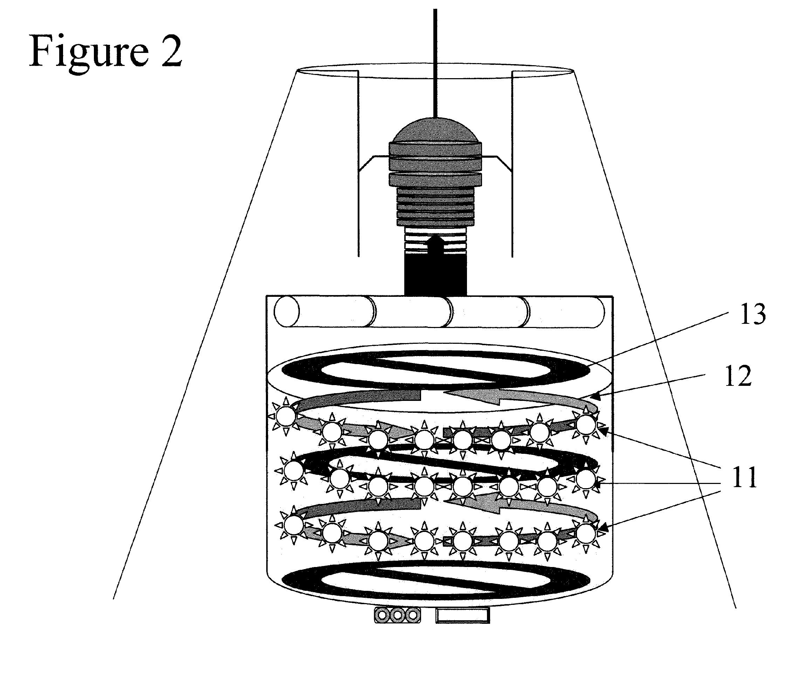

This device can be produced in various sizes depending on the fixtures aiming to be installed, while it can bring more filters and propeller motors. In Figure 2 we can distinguish the two rows above led (11) the other propeller motor (12) and the other filter (13) in relation to Figure 1. Furthermore we have the possibility though the control panel to choose the lighting we wish, by turning on the led lighting in any order or all of them, and we can also put coloured led lines and giving the desired colour in a space/room. We can also choose, through the control system , whether we will operate one or two absorption motors.

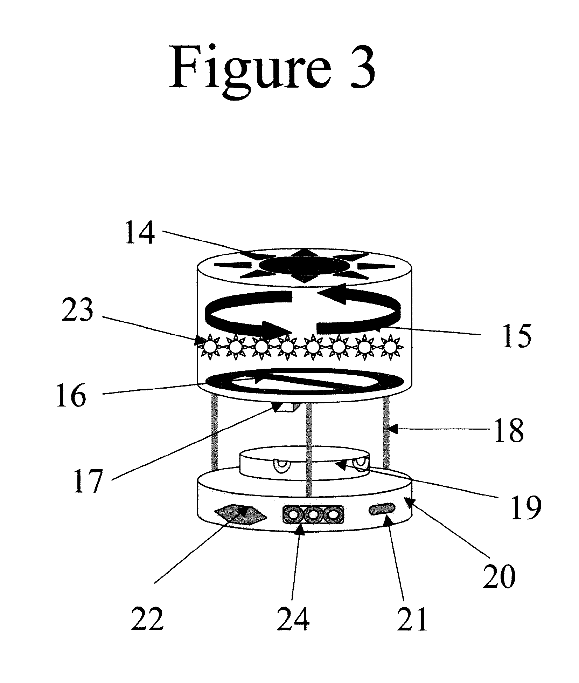

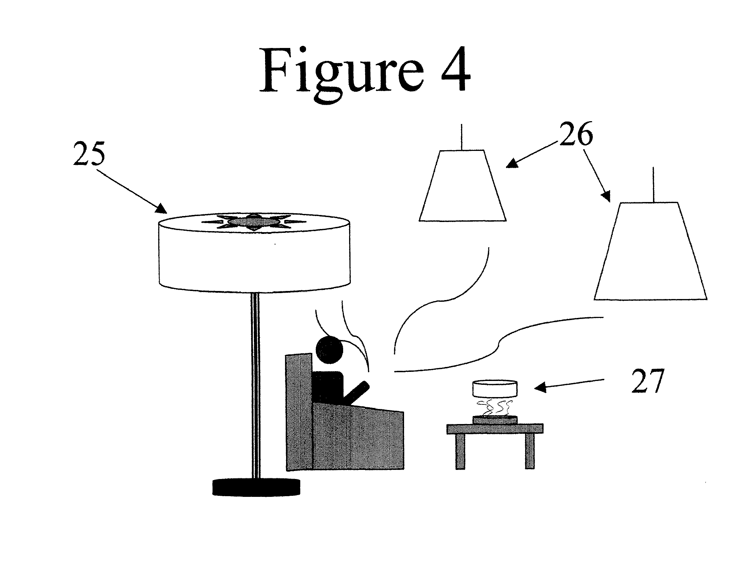

With the same concept, the device can be placed over an ashtray (19) being into a lamp shade, in Figure 3., where we give an example. So when a cigarette is placed in the ashtray the smoke is not diffused in space, but is absorbed through the propeller motor (15), passing through the filters (16 ) fabric of silk , and (14) carbon, and finally it comes out clean, in space . The activation of the device can be realized automatically by a motion sensor or smoke sensor(17) for a period for three minutes (duration of smoking a cigarette), or it can operate constantly purifying the air in the space. The automatic or continuos operation, as well as lighting led (23) are selected by the button (22). On the base (20) are placed the batteries that provide power to the device. The batteries are loading via a usb (21) which when it is connected, it loads and provides power and when it is disconnected, the batteries start to operate. At the base there are valves (24) with the indication of filters' change. The apparatus of Figures 1 and 2 can be placed on a lamp column (25) so when the smoker is sitting near it ,the device collects the smoke before its expansion in a room. When a cigarette is in the ashtray the device showed in Figure 3 (27) operates and the smoke that escapes is cleaning by the devices of projects 1 and 2 are placed in the lightings 26. Therefore, we can see in Figure 4 the combination of devices that can operate in a room/space placed inside luminaires , offering elegance and clearance.

## Claims

1. The absorption and air purification device adapted in lighting fixtures, exploits the inside place of a lighting and is put there, while it takes the energy needed, by the power from the socket. The adapter support (3) has the same shape and size of a screw lamp , while using the terminals of the metal base, the device is powered by the electricity the same as been a lamp. Summarizing, unscrewing a lamp from the fixture, we screw the device in its place taking support and energy. We replace the lighting of a lamp by using a led tape around the device (6)

2. The device can have an alternative energy source though batteries (10), that start operation automatically in case of power failure, providing a 3 hours autonomy.

3. The device has at the bottom, a filter fabric of silk (7), a propeller electric motor (5) for the absorption of smoke and in the top a carbon filter (4). The replacement of filters have a lighting indication (9).

4. This device can operate as air purifier or lighting, or both together, or can operate automatically each time the sensor detects smoke in the place (17) .

5. The device has a smoke sensor to be automatically activated when there is smoke in the area.

6. The device has ionization lamps that attract and clean the smoke.
